# EUROPÄISCHE PATENTSCHRIFT

(11) **EP 2 177 418 B1**
(45) Veröffentlichungstag und Bekanntmachung des Hinweises auf die Patenterteilung: **24.08.2011**
(21) Anmeldenummer: 08018314.8
(22) Anmeldetag: 20.10.2008
(51) Int. Cl.: B62B 3/00, B62B 3/04, B62B 3/16, B65D 21/02, B65D 85/18

(54) **Mehrweg-Transporteinrichtung für hängend transportierte Kleidungsstücke**
Reusable transport device for clothing transported on hangers
Dispositif de transport à plusieurs trajectoires pour des pièces de vêtement transportées de manière suspendue

(43) Veröffentlichungstag der Anmeldung: 21.04.2010
(73) Patentinhaber: Deutsche Post AG, 53113 Bonn (DE)
(72) Erfinder: Walther, Thomas, 45478 Mühlheim/Ruhr (DE); Lippe, Karl-Heinz, 45529 Hattingen (DE); Schröer, Nina, 42555 Velbert (DE)
(74) Vertreter: Ostriga, Sonnet, Wirths & Roche

(56) Entgegenhaltungen:
- DE-U1- 29 515 479
- FR-A- 2 686 324
- NL-A- 9 401 915
- US-A- 3 379 482
- US-A- 5 129 491
- US-A1- 2003 192 841
- US-A1- 2005 057 011

## Beschreibung

Die Erfindung betrifft eine Mehrweg-Transporteinrichtung für Textilien, insbesondere für hängend transportierte Kleidungsstücke, mit einer Plattform mit unterseitig angeordneten Rollen, sowie an gegenüberliegenden Seiten der Plattform angeordneten Vertikalträgern, die einen Horizontalträger zum Einhängen von Textilien tragen.

Gattungsgemäße Mehrweg-Transporteinrichtungen sind durch offenkundige Vorbenutzung im Bereich der Textillogistik, also insbesondere der Belieferung von Warenhäusern und Boutiquen mit Kleidungsstücken hinlänglich bekannt. Es handelt sich üblicherweise um eine Plattform oder einen Rahmen, der mit Rollen versehen ist. Auf Plattform oder Rahmen sind vertikale Träger aufgesetzt, die durch einen Horizontalträger miteinander verbunden sind. Der Horizontalträger dient als Kleiderstange zum Einhängen von Kleidungsstücken an Kleiderbügeln.

In US 2003/0192841 A1 ist eine Transporteinrichtung gemäß dem Oberbegriff von Anspruch 1 offenbart, die aus einem auf Rollen angeordneten Rahmen besteht. Der Rahmen bildet Vertikalträger aus, auf denen Regalfächer horizontal aufliegen und eine Art Deckel für einen darunter liegenden, der Aufnahme von hängenden Textilien dienenden Raum bilden. Zwischen den Vertikalträgern können Wandteile angeordnet sein, die den Raum seitlich verschließen.

FR 2686324 zeigt ein einseitig offenes Lagergestell zur hängenden Anordnung von Textilien. Auf einer dreiseitig geschlossene Hülse ist ein Querträger zum Stabilisieren der Hülse und aufhängen von Textilien anzuordnen. Auf die Hülse kann ein Deckel gesetzt werden.

NL 9401915 zeigt einen Transportbehälter für hängende Textilien. Hierbei handelt es sich um eine zweigeteilte Box, deren Hälften über ein Scharnier vertikal aufklappbar aneinander befestigt sind der Transportbehälter ist auf Rollen gelagert und verfügt über einen Horizontalträger, an welchem Textilien aufhängbar sind.

Eine vergleichbare Transporteinrichtung zeigt US 5,129,491 B. Zudem sind aus US 2005/0057011 A1 und US 3,379,482 B kastenartige Transportbehälter für andere Zwecke bekannt. Eine Gitterbox auf Rollen zeigt DE 295 15 479 U1.

Textillogistikunternehmen nutzen Transporteinrichtungen zur Belieferung von Warenhäusern oder Boutiquen, stellen diese vor den Geschäften ab und übergeben diese während der Geschäftszeiten an die Mitarbeiter. Im Gegenzug werden gleichartige Transporteinrichtungen von der vorherigen Lieferung rückgeführt.

Die aus dem Stand der Technik bekannten Mehrweg-Transporteinrichtungen sind in vielerlei Hinsicht nachteilig. Zunächst hängen die Kleidungsstücke offen, allenfalls durch eine um die Kleidungsstücke herum gelegte Folie geschützt. Sie sind folglich der Gefahr von Beschädigung und Verschmutzung ausgesetzt. Der offene Transport hat weiterhin den Nachteil, dass die Kleidungsstücke insbesondere bei Anlieferung vor den Geschäftszeiten offen im Warenannahmebereich der Geschäfte stehen. Allein die Sichtbarkeit der Ware führt zu einem erheblich höheren Diebstahlrisiko. Weiterhin sind die aus dem Stand der Technik bekannten Transporteinrichtungen insbesondere bei der Rückführung recht sperrig. Obwohl keine Waren befördert werden, nehmen die Transporteinrichtungen denselben Raum ein wie bei der Warenbeförderung. Schließlich haben die aus Stabilitätsgründen meist aus Metall gefertigten Transporteinrichtungen ein nicht unerhebliches Eigengewicht.

Aufgabe der Erfindung ist es folglich, eine Mehrweg-Transporteinrichtung für insbesondere hängend transportierte Textilien zu schaffen, die die Nachteile aus dem Stand der Technik überwindet.

Gelöst wird die Aufgabe von einer Mehrweg-Transporteinrichtung mit den Merkmalen des Anspruches 1, insbesondere mit dessen kennzeichnenden Merkmalen.

Der wesentliche Vorteil der erfindungsgemäßen Transporteinrichtung ist, dass die Kleidungsstücke innerhalb der Hülse gelagert sind. So sind sie sicher gegen Beschädigung und Verschmutzung geschützt. Hinzu kommt der durch die Hülse bewirkte Sichtschutz, der die Gefahr des Gelegenheitsdiebstahls wesentlich reduziert. So kann die Transporteinrichtung auch außerhalb der Geschäftszeiten ausgeliefert werden.

Zur Gewichtsreduzierung ist vorgesehen, dass Plattform, Deckel und Hülse aus Kunststoff gefertigt sind. Dabei sind Plattform und Deckel im Tiefziehverfahren, insbesondere im Twinsheet-Tiefziehverfahren hergestellt, die Hülse hingegen wird bevorzugt extrudiert.

Um eine wesentliche Volumenreduzierung bei der Rückführung der Mehrwegbehälter zu erreichen, ist vorgesehen, dass die Hülse zusammenlegbar und zwischen Plattform und Deckel lagerbar ist. Hierdurch wird eine wesentliche Höhenreduzierung der erfindungsgemäßen Transporteinrichtung erreicht.

Die Rückführung lässt sich weiterhin wesentlich optimieren, wenn der Deckel mit der Lage der Plattformrollen korrespondierende Vertiefungen aufweist, so dass mehrere Mehrwegbehälter - Plattform auf Deckel - stapelbar sind. Die Vertiefungen im Deckel nehmen die Plattformrollen zumindest teilweise auf. Selbstverständlich ist auch das Stapeln der mit Textilien bestückten Mehrwegbehälter bei Warenauslieferung denkbar.

Es ist von wesentlichem Vorteil, wenn Plattform und Deckel Riegeleinrichtungen tragen, die eine sichere Verbindung zwischen Plattform und Hülse, Deckel und Hülse sowie zwischen Plattform und Deckel gewährleisten.

Für die Logistikkette, insbesondere die eigentliche Auslieferung zum Kunden und das Verbringen der Transporteinrichtung zum Aufstellungsort der Ware, ist es von Vorteil, wenn die Grundfläche der Transporteinrichtung ein bestimmtes Maß nicht überschreitet. Als besonders günstiges Maß hat sich eine Grundfläche von 1200 x 600 mm erwiesen. Dies begrenzt jedoch die Maximalhöhe der zwischen Deckel und Plattform zu lagernden Hülse auf das zur Verfügung stehende Plattforminnenmaß. Um dennoch eine ausreichende Höhe der Transporteinrichtung zur Aufnahme hängender Kleidungsstücke zu gewährleisten, ist es vorteilhaft, wenn die Plattform eine zum Deckel gerichtete Wandung aufweist, die mit einer Profilierung zur Halterung der an der Wandung anordenbaren Hülse versehen ist. Die Addition von Wandungshöhe und Hülsenhöhe ergibt eine ausreichende Höhe der Transporteinrichtung. Ein weiterer Vorteil ist, dass auch bei demontierter Hülse ein ausreichender Aufnahmeraum für weitere Kleinteile, beispielsweise Kleiderbügel, vorhanden ist. Dies ermöglicht nicht nur eine Rückführung der Transporteinrichtung, sondern auch zu dieser zugehörige Teile.

Es ist vorgesehen, dass die zwischen Plattform und Deckel angeordnete Hülse die maximal zur Einlage zur Verfügung stehende Grundfläche einnimmt, um eine ausreichende Höhe der Transporteinrichtung für hängend zu transportierende Textilien zu gewährleisten.

Bei einer besonders bevorzugten Ausführungsform ist vorgesehen, dass die Hülse vertikal derart zweiteilig ausgebildet ist, dass eine Behälterseitenwand mittels Demontage eines Hülsenteils frei zugänglich ist. Durch Demontage eines Hülsenteils und somit einer Behälterseitenwand wird eine größtmögliche Bedienöffnung zum Ein- bzw. Aushängen der Kleidungsstücke geschaffen.

Es ist vorgesehen, dass der Deckel vertikal zweigeteilt ist, beide Teile über eine Schwenkeinrichtung mit einer horizontalen Schwenkachse miteinander verbunden sind, so dass der Deckel in eine Offenstellung schwenkbar ist.

Diese Ausführungsform hat den wesentlichen Vorteil, dass sich die Transporteinrichtung durch Aufschwenken des einen Deckelteils öffnen lässt, während der zweite Deckelteil auf der Hülse verankert bleibt. Die Bedienöffnung wird so weiter vergrößert, das Einhängen der zu transportierenden Kleidungsstücke weiter vereinfacht.

Eine besonders bevorzugte Ausführungsform kennzeichnet sich dadurch, dass der Deckel eine entlang der Schwenkachse verlaufende Nut aufweist, dass die Schwenkachse in der Nutwandung angeordnet ist, dass ein Haltemittel für Textilien an der Nutwandung angeordnet ist, dass ein Eingriffsmittel für das Haltemittel vorgesehen ist, dass Haltemittel, Nutwandung und Schwenkachse derart einander zugeordnet sind, dass eine Anordnung von Haltemittel und Eingriffsmittel bei geschlossenem Deckel unlösbar, bei geöffnetem Deckel jedoch lösbar ist.

Durch das Anordnen des Haltemittels - es kann sich hierbei um eine Kleiderstange handeln, aber auch einzelne Ösen sind denkbar - an der Nutwandung, insbesondere im Nutraum selbst vergrößert sich die nutzbare Innenhöhe weiter, da der tiefste Punkt des Haltemittels bevorzugt mit der Unterseite des Deckels abschließt. Das Haltemittel ist somit innerhalb des vom Deckel in Anspruch genommenen Bauraumanteils der Transporteinrichtung gelagert.

Die Nut ist durch die Schwenkachse in etwa zweigeteilt. Bei geschlossenem Deckel weist die Nutöffnung in Richtung Plattform. Durch Öffnen des Deckels wird auch ein Teil der Nutwandung weggeschwenkt, so dass der Nutraum einen Eingriff auch in horizontaler Richtung erlaubt. In das im Nutraum einliegende Haltemittel können nunmehr Kleidungsstücke mittels eines geeigneten Eingriffsmittels, beispielsweise einem Kleiderhaken, eingehängt werden. Bei Schließen des Deckels schwenkt die Nutwandung in ihre Ausgangsstellung zurück, die nunmehr den für das Einhängen notwendigen Horizontaleingriff blockiert. Im Umkehrschluss bedeutet dies, dass auch die zur Einhängrichtung entgegengesetzte horizontale Entnahmerichtung durch die Nutwandung blockiert ist. Folglich können sich die Eingriffsmittel vom Haltemittel während des Transports nicht unbeabsichtigt lösen.

Es ist daher vorgesehen, dass die Nutwandung das Eingriffsmittel am Haltemittel hält.

Im Zusammenhang mit der Demontage einer Behälterseitenwand durch Zweiteilung des Hülsenteils ist es von besonderem Vorteil, wenn die Hülse vertikal derart zweiteilig ausgebildet ist, dass eine Behälterseitenwand mittels Demontage eines Hülsenteils frei zugänglich ist.

So ist gewährleistet, dass das demontierbare Hülsenteil bei geschlossener Transporteinrichtung durch den Deckel und die Plattform gehalten ist. Bei geöffnetem Deckel kann das demontierbare Hülsenteil von der Plattform angenommen werden, so dass eine größtmögliche Bedienöffnung der Transporteinrichtung bei vorteilhafter Halterung geschaffen ist.

Es ist vorgesehen, dass Plattform und aufgesetzte Hülse und/oder Hülse und aufgesetzter Deckel mit einem Ein- und/oder Mehrwegverschlussmittel miteinander verbunden sind, insbesondere wenn das Einwegverschlussmittel eine Plombe und das Mehrwegverschlussmittel ein Vorhängeschloss ist.

Die erfindungsgemäßen Verschlussmittel, gleich ob Einwegoder Mehrwegverschlussmittel behindern den unberechtigten Zugang zum Innenraum der Transporteinrichtung.

Weitere Vorteile der Erfindung ergeben sich aus der folgenden Zeichnungsbeschreibung eines Ausführungsbeispiels. Es zeigen:
- Fig. 1: eine erfindungsgemäße Mehrweg-Transporteinrichtung in Lieferkonfiguration in perspektivischer Ansicht,
- Fig. 2: die Transporteinrichtung gemäß Fig. 1 in Rückführkonfigura- tion,
- Fig. 3: die Transporteinrichtung gemäß Fig. 2 ohne Deckel,
- Fig. 4: die Transporteinrichtung gemäß Fig. 3 mit aufgesetzter Halb- hülse,
- Fig. 5: die Transporteinrichtung gemäß Fig. 4 mit aufgesetztem und geöffnetem Deckel,
- Fig. 6: Detailansicht des geöffneten Deckels gemäß Fig. 5,
- Fig. 7: ein Deckel für die Transporteinrichtung gemäß Fig. 1 bis 6,
- Fig. 8: und 9 Vertikalschnitte durch den geöffneten bzw. geschlosse- nen Deckel gemäß Schnittlinie I-I in Fig. 7.

Eine Mehrweg-Transporteinrichtung - vereinfacht auch nur als Transporteinrichtung bezeichnet - ist in den Fig. insgesamt mit der Bezugsziffer 10 versehen.

Die Transporteinrichtung 10 umfasst eine als Boden dienende Plattform 11, welche auf Rollen 12 steht. Die Plattform 11 ist mit einer umlaufenden, zum Deckel 13 gerichteten Wandung 14 versehen, die bei bevorzugter Ausführungsform einstückig stoffschlüssig mit der Plattform 11 ausgebildet ist. Über eine nur schematisch dargestellte Profilierung 15 ist an der Wandung 14 eine Hülse 16 angeordnet, auf welcher der Deckel 13 aufgelegt ist. Die Hülse 16 ist vertikal zweigeteilt und umfasst ein erstes Hülsenteil 17 und ein zweites Hülsenteil 18. Plattform, Deckel und Hülse sind aus Kunststoff gefertigt.

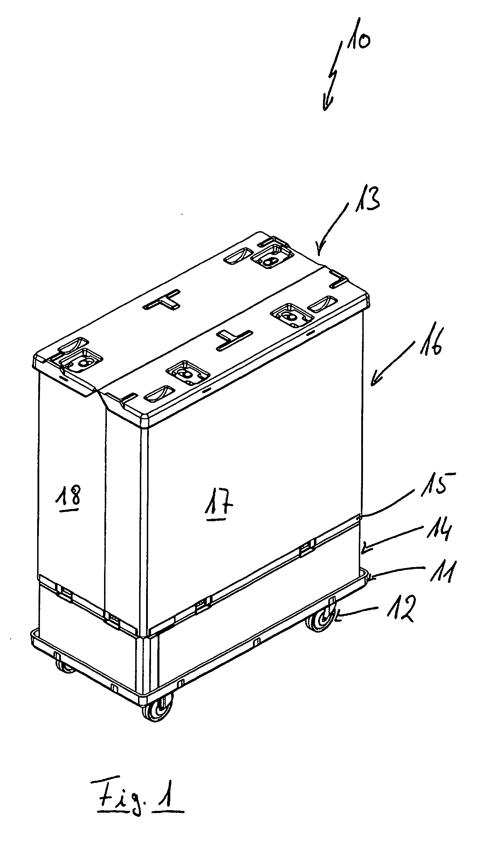

Die Transporteinrichtung 10 dient dem Verbringen von hängend zu lagernden Kleidungsstücken, insbesondere der Belieferung von Warenhäusern und Boutiquen durch Logistikuntemehmen. Die zum hängenden Transport notwendige Behälterhöhe wird insbesondere durch die zwischen Plattform 11 und Deckel 13 angeordnete Hülse 16 gewährleistet. In der in Fig. 1 dargestellten Lieferkonfiguration ist die Transporteinrichtung 10 mit Hängetextilien bestückt und wird dem Empfänger überstellt.

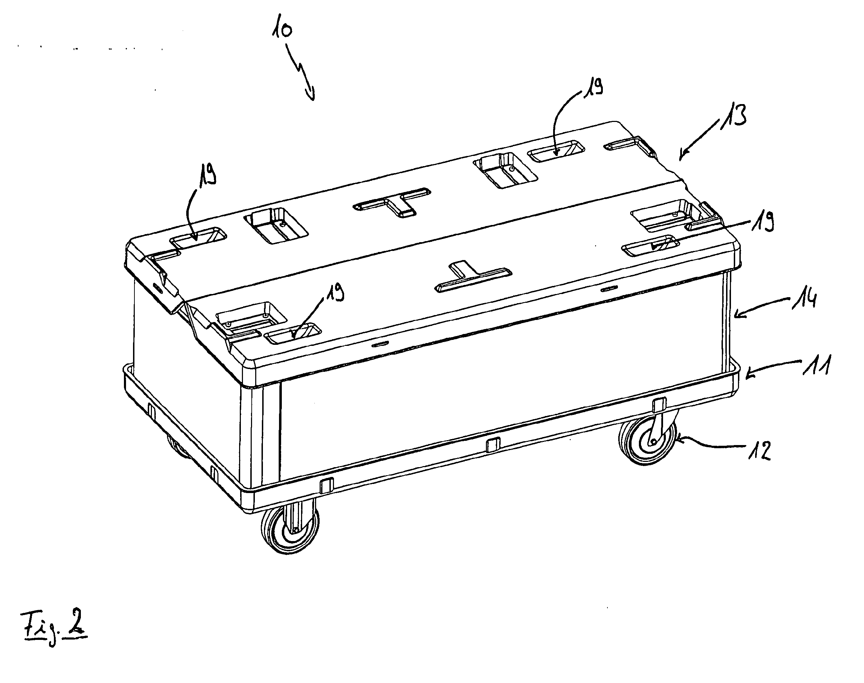

In Fig. 2 ist die Transporteinrichtung 10 in ihrer Rückführkonfiguration dargestellt. Die Hülse 16 wurde hierfür von der Wandung 14 und dem Deckel 13 gelöst, zusammengelegt und ist innerhalb der so beträchtlich in ihrer Höhe reduzierten Transporteinrichtung 10, nämlich im Zwischenraum zwischen Deckel 13 und Plattform 11 gelagert. Der in Fig. 2 dargestellte Rückführcontainer bietet im Zwischenraum zwischen Deckel 13 und Plattform 11 jedoch nicht nur ausreichend Raum für die zusammengelegte Hülse 14, sondern auch Raum für die weitere, an den Versender rückzuführende Teile, wie beispielsweise Kleiderbügel.

Es ist offensichtlich, dass die Rückführung der Transporteinrichtung 10 in der in der Fig. 2 dargestellten Konfiguration durch die wesentliche Volumenreduzierung der Transporteinrichtung 10 erhebliche Vorteile hat. Der für die Rückführung benötigte Raum wird wesentlich reduziert, was die Rückführung kostengünstiger macht. Zudem sind zumindest in der Rückführkonfiguration der Transporteinrichtung 10 mehrere Rückführcontainer übereinander stapelbar. Hierzu weist der Deckel nach oben hin offene Vertiefungen 19 auf, die in ihrer Anordnung der Anordnung der plattformseitigen Rollen 12 entsprechen. So kann auf den in Fig. 2 dargestellten Rückführcontainer ein ebensolcher aufgesetzt werden, indem dessen Rollen in die dafür vorgesehenen Vertiefungen 19 des Deckels 13 eines weiteren Rückführcontainers eingesetzt werden.

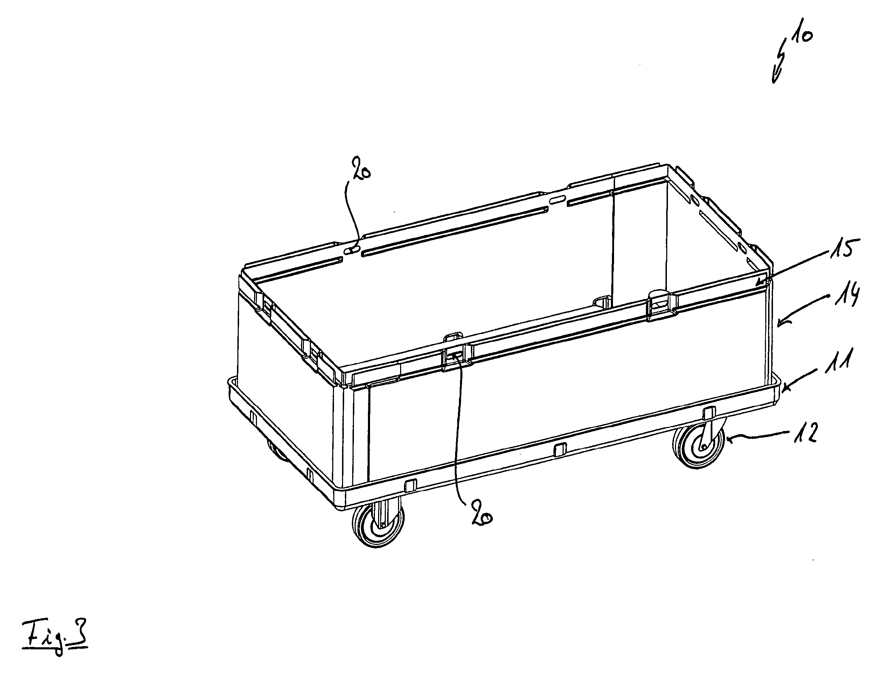

In Fig. 3 ist die Transporteinrichtung 10 ohne Deckel 13 und Hülse 16 dargestellt. Sehr gut erkennbar ist der von der Wandung 14 umgebende Innenraum, in welchem bei Rückführung der Transporteinrichtung 10 zum Versender die Hülse und weitere Kleinteile lagerbar sind. Außerdem erkennbar sind Regelöffnungen 20 im Bereich der Profilierung 15 der Wandung 14. In diese greifen nicht dargestellte, deckelseitige Riegel ein, um in der Rückführkonfiguration gemäß Fig. 2 den Deckel 13 sicher auf der Wandung 14 zu verankern. In der in Fig. 1 dargestellten Lieferkonfiguration verbinden ebenfalls nicht dargestellte Riegelmittel durch Eingriff in die Riegelöffnungen 20 die Hülse 16 mit der Wandung 14.

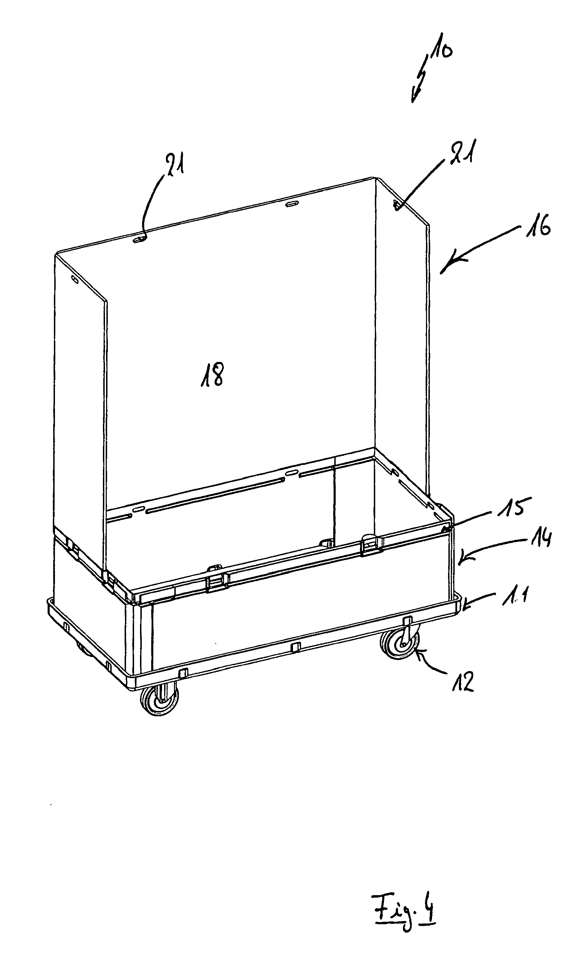

In Fig. 4 ist die Wandung 14 mit dem zweiten Hülsenteil 18 der Hülse 16 versehen worden. Das zweite Hülsenteil 18, wie auch das nicht dargestellte erste Hülsenteil 17, weist im Bereich der Profilierung 14 deckungsgleich mit den wandungsseitigen Öffnungen 20 angeordnete Riegelöffnungen 21 auf. Weitere Riegelöffnungen 21 befinden sich im zum Deckel 13 gewandten Bereich der Hülse 16. Diese korrespondieren mit den vorerwähnten deckelseitigen Riegeln, so dass der Deckel durch seine Riegel sicher auf der Hülse 16 verankert werden kann.

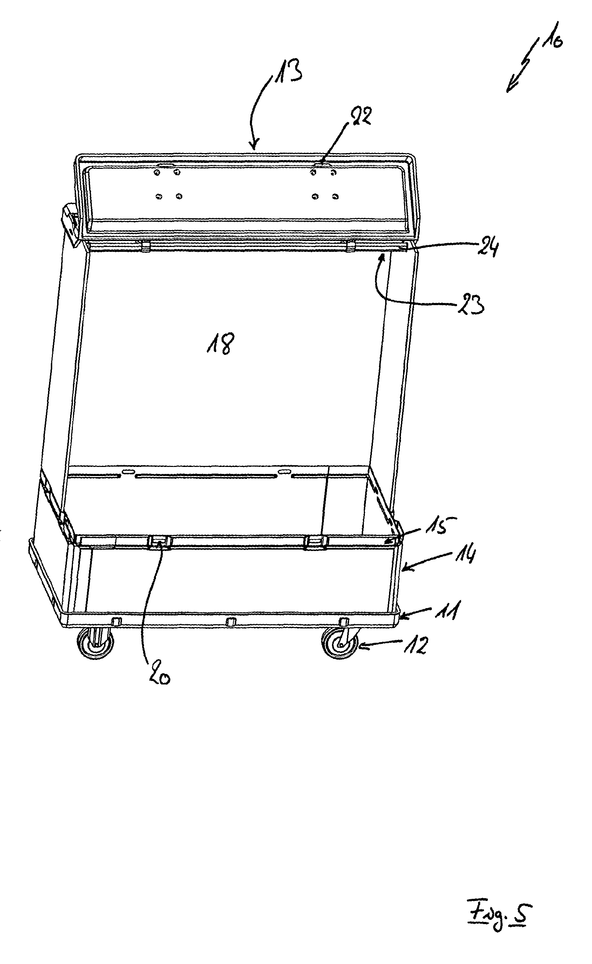

In Fig. 5 ist die Transporteinrichtung 10 gemäß Fig. 4, jedoch ergänzt um den Deckel 13, dargestellt. Der Deckel 13 befindet sich in seiner Offenstellung, so dass angedeutete Riegelmittel 22 sichtbar sind. Diese greifen in hülsenseitige Riegelöffnungen 21 bzw. in der Rückführkonfiguration gemäß Fig. 2 in wandungsseitige Riegelöffnungen 20 ein, wenn sich der Deckel 13 in seiner Geschlossenstellung befindet. Der Deckel 13 weist ein Haltemittel 23 in Form einer am Deckel 13 befestigten Kleiderstange 24 auf.

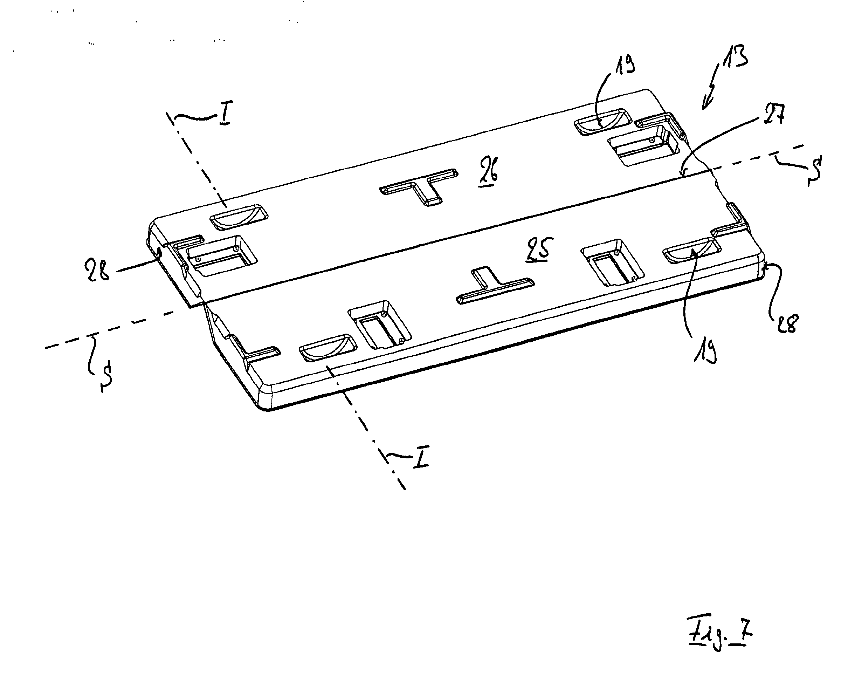

Fig. 7 zeigt den Deckel 13 in Geschlossenstellung in perspektivischer Aufsicht. Der Deckel 13 ist vertikal zweiteilig ausgebildet und umfasst folglich ein erstes Deckelteil 25 und ein zweites Deckelteil 26. Beide sind über ein Schwenkmittel 27, bevorzugt ein Filmscharnier, miteinander verbunden, wobei die Schwenkachse S des Schwenkmittels 27 in der den Deckel 13 zweiteilenden Vertikalebene liegt.

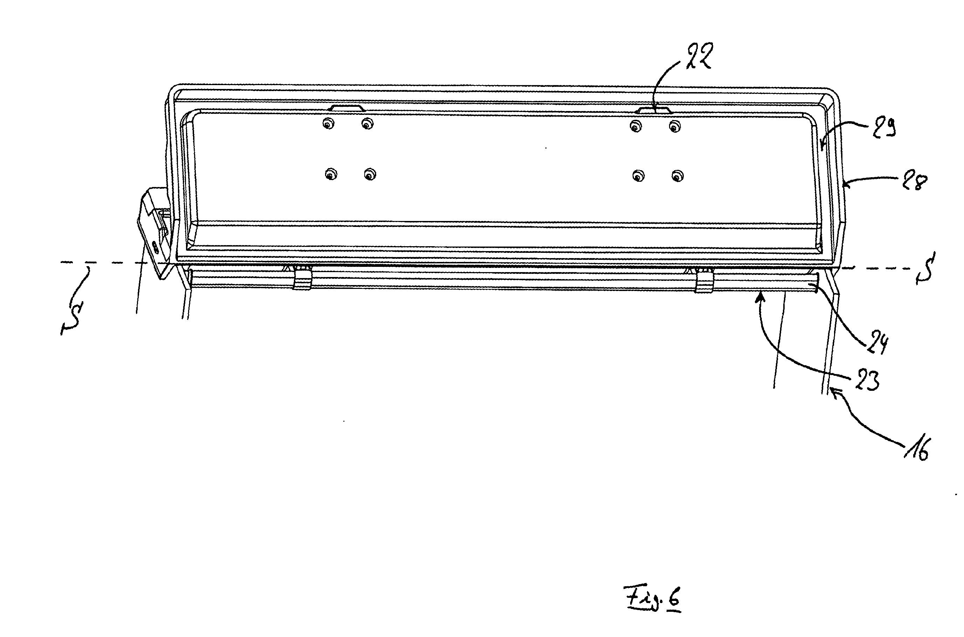

Das zweite Deckelteil 26 wird vorliegend auch als fest angeordnetes Deckelteil bezeichnet, da dies sowohl in der Lieferkonfiguration der Fig. 1 wie auch der Rückführkonfiguration der Fig. 2 ortsfest auf dem zweiten Hülsenteil 18 der Hülse 16 bzw. der Wandung 14 angeordnet ist. Das auch als klappbares Deckelteil bezeichnete erste Deckelteil 25 lässt sich hingegen in den Konfigurationen der Fig. 1 und 2 nach Lösen der in Fig. 7 nicht dargestellten Riegelmittel 22 von der in der Fig. 7 dargestellten geschlossenen Position in eine Offenposition (siehe Fig. 5 und 6) schwenken.

Neben den Riegelmitteln 22 dient auch der an den Deckelteilen 25 und 26 umlaufend angeordnete und zur Plattform 11 weisende Rand 28 der sicheren Deckelanordnung auf der Hülse 16. Wie aus der Detailansicht des geöffneten Deckels in Fig. 6 deutlich wird, bildet der Rand 28 den äußeren Wandungsteil einer unterseitig am Deckel angeordneten Aufsetznut 29, in welcher der obere Hülsenrandbereich gelagert ist. In der Rückführkonfiguration der Fig. 2 liegt die Profilierung der Wandung 14 in der Aufsetznut 29 ein.

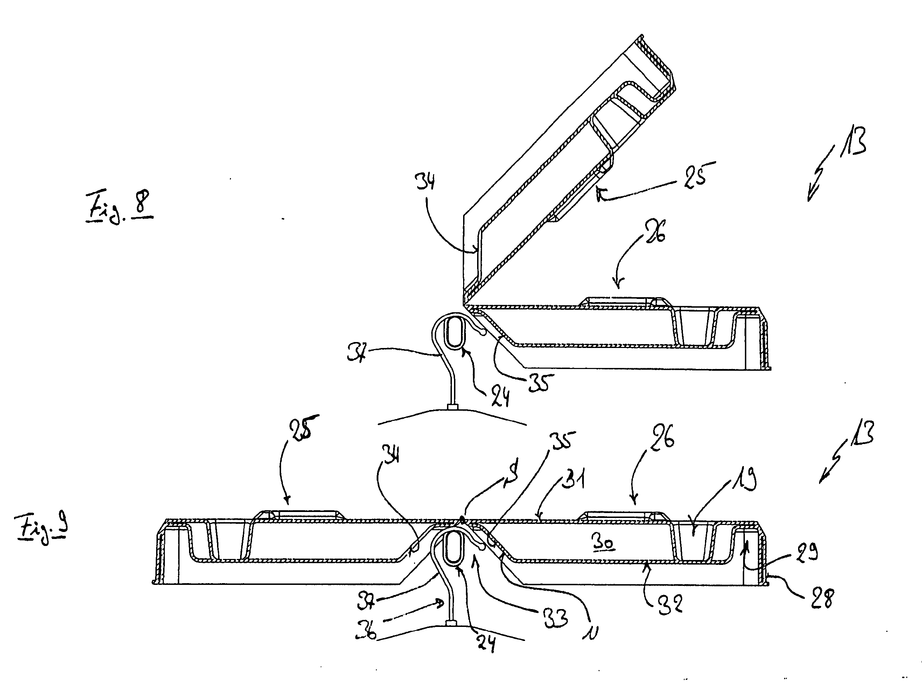

In Fig. 9 ist eine Schnittansicht des Deckels 13 gemäß der Schnittlinie I-I in Fig. 7 dargestellt. Dabei handelt es sich um einen Vertikalschnitt des Deckels 13, wobei die Schnittebene orthogonal zur Schwenkachse S ausgerichtet ist. Aus der Schnittdarstellung der Fig. 9 ist ersichtlich, dass der tiefgezogene Kunststoffdeckel 13 zwei einen Hohlraum 30 bildende Materiallagen 31 und 32 aufweist.

Der Deckel 13 weist im Bereich der Schwenkachse S eine Nut 33 auf. Diese bildet ihre Nutöffnung in Richtung Plattform 11 aus und durchzieht den Deckel durchgängig parallel zur Schwenkachse S. Die Schwenkachse S ist dabei in der Nutwandung N angeordnet. Die Schwenkachse S teilt die Nutwandung N in zwei Nutwandungsabschnitte 34 und 35.

Innerhalb des von der Nut 33 gebildeten Nutraumes ist die Kleiderstange 24 angeordnet. Wie in Fig. 9 dargestellt, wird in die Kleiderstange 24 ein Eingriffsmittel 36 in Form eines Kleiderbügels 37 zur hängenden Anordnung von Kleidungsstücken eingebracht. In geschlossenem Zustand des Deckels gemäß Fig. 9 ist der Nutraum nur vertikal von unten zugänglich.

In Fig. 8 ist der Deckel 13 ebenfalls im Vertikalschnitt dargestellt, befindet sich jedoch in seiner Offenstellung. In dieser Stellung ist der Nutraum nicht nur vertikal, sondern auch in Horizontalrichtung zugänglich. Der dargestellte Kleiderbügel 37 wird in Horizontalrichtung eingehängt wie auch entnommen. Dies ist bei geöffnetem Deckel 13 gemäß Fig. 8 sehr leicht möglich. Bei geschlossenem Deckel gemäß Fig. 9 blockiert die Nutwandung 34 jedoch eine Bewegung des Kleiderbügels 37 in horizontaler Richtung. Zudem liegt die Nutwandung 34 derart dicht über dem Haken des Kleiderbügels bzw. an diesem an, dass dieser auch nicht vertikal nach oben von der Kleiderstange wegbewegt werden kann. Bei geschlossenem Deckel gemäß Fig. 9 verhindert folglich die Anordnung von Kleiderstange 24, Kleiderbügel 37, Nutwandung N mit ihren Nutwandungsabschnitten 34 und 35, sowie die Schwenkachse S eine Entnahme des Kleiderbügels 37 von der Kleiderstange 24. Ein unbeabsichtigtes Lösen des Kleiderbügels während des Transportes der Transporteinrichtung 10 wird somit sicher vermieden. Bei geöffnetem Deckel ist hingegen das einfache Bestücken der Transporteinrichtung 10 bzw. die einfache Entnahme der Kleidungsstücke möglich.

Das Bestücken der Transporteinrichtung 10 mit sowie die Entnahme von Kleidungsstücken wird weiterhin durch die zweiteilige Ausführung der Hülse erleichtert. Wie die vergleichende Betrachtung der Fig. 1 und 5 zeigt, lässt sich das erste Hülsenteil 17 bei geöffnetem Deckel von der Wandung 14 lösen und entfernen. Da die vertikale Zweiteilung der Hülse 16 derart ausgebildet ist, dass das erste Hülsenteil 17 in seiner Abmessung zumindest einer kompletten Seitenwand der Transporteinrichtung 10 entspricht, wird so die größtmögliche Bedienöffnung geschaffen.

Die Wandung 14 ermöglicht es, bei vorgegebenen Plattformgrundfläche und der infolge dessen festgelegten maximalen Hülsenhöhe den Nutzraum der Transporteinrichtung zu vergrößern. Die Nutzhöhe der Transporteinrichtung 10 wird um den Betrag vergrößert, der der Höhe der Wandung 14 entspricht.

Bei dem bevorzugten Ausführungsbeispiel der Erfindung hat die Grundfläche der Plattform 11 ein Außenmaß von 1200 x 600 mm. Dies schränkt aufgrund des verringerten Innenmaßes der Plattformbox die Höhe der Hülse auf etwa 1150 mm ein. Durch eine Wandungshöhe von 200 mm lässt sich eine Gesamtinnenhöhe von 1350 mm schaffen. Die spezielle Anordnung der Kleiderstange 24 im Deckel 13 gewährleistet, dass diese Höhe auch der nutzbaren Gesamthöhe entspricht. Wäre die Kleiderstange unterhalb des Deckels angeordnet, würde sich die nutzbare Innenhöhe um etwa 100 mm verringern, um ein bequemes Ein- und Aushängen der Kleiderbügel zu gewährleisten.

Die Kleiderstange weist bevorzugt eine Antirutschbeschichtung auf. Anstelle der Kleiderstange 24 sind auch einzelne Ösen oder ähnliche Haltemittel denkbar. Die Zweiteilung des Deckels 13 erfolgt bevorzugt im Verhältnis 2:3. Die Hülse kann mit Griffteilen zur besseren Handhabbarkeit der Transporteinrichtung versehen sein.

Es ist vorgesehen, die Mehrwegtransporteinrichtung 10 mittels Ein- oder Mehrwegverschlussmitteln gegen unbeabsichtigten Zugriff zu sichern. Dabei kann es sich um Plomben oder Vorhängeschlösser oder eine Kombination aus beidem handeln. Solche Verschlussmittel sind in der Lieferkonfiguration gemäß Fig. 1 zur Verbindung von Deckel und Hülse sowie Hülse und Wandung vorzusehen, in der Rückführkonfiguration der Fig. 2 lediglich zwischen Deckel 13 und Wandung 14.

Zusammenfassend wurde eine neuartige Transporteinrichtung 10 geschaffen, deren einzelne Merkmale jedes für sich deutliche Vorteile gegenüber dem Stand der Technik aufweisen. In der Summe der Merkmale handelt es sich um eine aufgrund der Verwendung von Kunststoffteilen - nämlich Kunststoffplattform 11, Kunststoffhülse 16 und Kunststoffdeckel 13 - ausgesprochen leichte Transporteinrichtung, deren maximal nutzbarer Innenraum, insbesondere die maximal nutzbare Innenhöhe, bei minimal genutztem Außenraum, insbesondere minimaler Außenhöhe, realisiert wird.

Durch die abnehmbare und zusammenlegbare Hülse, die zu dem zwischen Deckel 13 und Plattform 11 lagerbar ist, wird ein Rückführcontainer geschaffen, dessen Volumen gegenüber seiner Lieferkonfiguration deutlich reduziert ist. Hierdurch lassen sich insbesondere bei der Rückführung der Mehrwegtransporteinrichtung 10 enorme Kostenersparungen realisieren.

### Bezugszeichenliste:

- 10: Mehrweg-Transporteinrichtung
- 11: Plattform
- 12: Rollen
- 13: Deckel
- 14: Wandung
- 15: Profilierung v. 14
- 16: Hülse
- 17: erstes Hülsenteil
- 18: zweites Hülsenteil
- 19: Vertiefung v. 13
- 20: Riegelöffnungen v. 14
- 21: Riegelöffnungen v. 16
- 22: Riegelmittel v. 13
- 23: Haltemittel
- 24: Kleiderstange
- 25: erstes Deckelteil
- 26: zweites Deckelteil
- 27: Schwenkmittel
- 28: Rand v. 13
- 29: Aufsetznut
- 30: Hohlraum v. 13
- 31: Materiallage v. 13
- 32: Materiallage v. 13
- 33: Nut v. 13
- 34: erster Nutwandungsabschnitt
- 35: zweiter Nutwandungsabschnitt
- 36: Eingriffsmittel
- 37: Kleiderbügel

- S: Schwenkachse
- N: Nutwandung

## Patentansprüche

1. Mehrweg-Transporteinrichtung (10) für Textilien, insbesondere für hängend transportierte Kleidungsstücke, mit einer Plattform (11) mit unterseitig angeordneten Rollen (12), sowie an gegenüberliegenden Seiten der Plattform (11) angeordneten Vertikalträgern, die einen Horizontalträger zum Einhängen von Textilien tragen, **dadurch gekennzeichnet, dass**
- die Plattform (11) einen Boden bildet,
- auf der Plattform (11) eine Hülse (16) abnehmbar aufgesetzt ist,
- die Vertikalträger von Hülsenwänden gebildet sind,
- auf den Hülsenwänden ein Deckel abnehmbar aufgelegt ist

2. Mehrweg-Transporteinrichtung nach Anspruch 1, **dadurch gekennzeichnet, dass** Plattform (11), Deckel (13) und Hülse (16) aus Kunststoff gefertigt sind.

3. Mehrweg-Transporteinrichtung nach Anspruch 1 oder 2, **dadurch gekennzeichnet, dass** die Hülse (16) zusammenlegbar und zwischen Plattform (11) und Deckel (13) lagerbar ist.

4. Mehrweg-Transporteinrichtung nach einem der Ansprüche 1 bis 3, **dadurch gekennzeichnet, dass** Plattform (11) und Deckel (13) Riegeleinrichtungen tragen, die eine sichere Verbindung zwischen Plattform (11) und Hülse (16), Deckel (13) und Hülse (16) sowie zwischen Plattform (11) und Deckel (13) gewährleisten.

5. Mehrweg-Transporteinrichtung nach einem der vorhergehenden Ansprüche, **dadurch gekennzeichnet, dass** die Plattform (11) eine zum Deckel (13) gerichtete Wandung (14) aufweist, die mit einer Profilierung (15) zur Halterung der an der Wandung (14) anordenbaren Hülse (16) versehen ist.

6. Mehrweg-Transporteinrichtung nach Anspruch 3, **dadurch gekennzeichnet, dass** die zwischen Plattform (11) und Deckel (13) angeordnete, zusammengelegte Hülse (16) im Wesentlichen die maximal zur Einlage zur Verfügung stehende Grundfläche einnimmt.

7. Mehrweg-Transporteinrichtung nach einem der vorhergehenden Ansprüche, **dadurch gekennzeichnet, dass** die Hülse (16) vertikal derart zweiteilig ausgebildet ist, dass eine Behälterseitenwand mittels Demontage eines Hülsenteils (17, 18) frei zugänglich ist.

8. Mehrweg-Transporteinrichtung nach einem der vorhergehenden Ansprüche, **dadurch gekennzeichnet, dass** der Deckel (13) vertikal zweigeteilt ist, beide Teile über eine Schwenkeinrichtung (27) mit einer horizontalen Schwenkachse (S) miteinander verbunden sind, so dass der Deckel (13) in eine Offenstellung schwenkbar ist.

9. Mehrweg-Transporteinrichtung nach Anspruch 8, **dadurch gekennzeichnet, dass** der Deckel (13) eine entlang der Schwenkachse (S) verlaufende Nut (33) aufweist, dass die Schwenkachse (S) in der Nutwandung (N) angeordnet ist, dass ein Haltemittel (23) für Textilien an der Nutwandung (N) angeordnet ist, dass ein Eingriffsmittel (36) für das Haltemittel (23) vorgesehen ist, dass Haltemittel (23), Nutwandung (N) und Schwenkachse (S) derart einander zugeordnet sind, dass eine Anordnung von Haltemittel (23) und Eingriffsmittel (36) bei geschlossenem Deckel (13) unlösbar, bei geöffnetem Deckel (13) jedoch lösbar ist.

10. Mehrweg-Transporteinrichtung nach Anspruch 9, **dadurch gekennzeichnet, dass** die Nutwandung (N) das Eingriffsmittel (36) am Haltemittel (23) hält.

11. Mehrweg-Transporteinrichtung nach Anspruch 7 und 8, **dadurch gekennzeichnet, dass** die Vertikalteilung der Hülse (16) in der Vertikalebene der Schwenkachse (S) liegt, so dass ein Hülsenteil (17, 18) bei geöffnetem Deckel (13) entfernbar, bei geschlossenem Deckel (13) von diesem jedoch gesichert ist.

12. Mehrweg-Transporteinrichtung nach einem der vorhergehenden Ansprüche, **dadurch gekennzeichnet, dass** Plattform (11) und aufgesetzte Hülse (16) und/oder Hülse (16) und aufgesetzter Deckel (13) mit einem Ein- und/oder Mehrwegverschlussmittel miteinander verbunden sind.

13. Mehrweg-Transporteinrichtung nach Anspruch 12, **dadurch gekennzeichnet, dass** das Einwegverschlussmittel eine Plombe und das Mehrwegverschlussmittel ein Vorhängeschloss ist.

14. Mehrweg-Transporteinrichtung nach einem der vorhergehenden Ansprüche, **dadurch gekennzeichnet, dass** der Deckel (13) mit der Lage der Plattformrollen (12) korrespondierende Vertiefungen (19) aufweist, so dass mehrere Transporteinrichtungen (10) - Plattform (11) auf Deckel (13) - stapelbar sind.

15. Mehrweg-Transporteinrichtung nach Anspruch 1, **dadurch gekennzeichnet, dass** der Horizontalträger Teil des Deckels (13) ist.

## Claims

1. Reusable transport device (10) for textiles, particularly for garments transported in a suspended manner, having a platform (11) with rollers (12) arranged on the underside, as well as vertical supports which are arranged on opposite sides of the platform (11) and carry a horizontal support for hanging up textiles,
**characterised in that**
- the platform (11) forms a base;
- a casing (16) is detachably placed on the platform (11);
- the vertical supports are formed by casing walls;
- a lid is detachably laid on the casing walls.

2. Reusable transport device according to claim 1, **characterised in that** the platform (11), lid (13) and casing (16) are manufactured from plastic.

3. Reusable transport device according to claim 1 or 2, **characterised in that** the casing (16) can be folded up and stored between the platform (11) and the lid (13).

4. Reusable transport device according to one of claims 1 to 3, **characterised in that** the platform (11) and lid (13) carry interlocking devices which guarantee a secure connection between the platform (11) and the casing (16), between the lid (13) and the casing (16) and between the platform (11) and the lid (13).

5. Reusable transport device according to one of the preceding claims, **characterised in that** the platform (11) has a wall (14) which is directed towards the lid (13) and is provided with profiling (15) for holding the casing (16), which casing can be arranged on the wall (14).

6. Reusable transport device according to claim 3, **characterised in that** the folded-up casing (16) arranged between the platform (11) and the lid (13) essentially takes up the maximum base area available for insertion purposes.

7. Reusable transport device according to one of the preceding claims, **characterised in that** the casing (16) is constructed vertically in two parts in such a way that a sidewall of the container is freely accessible by demounting part (17, 18) of the casing.

8. Reusable transport device according to one of the preceding claims, **characterised in that** the lid (13) is divided in two vertically and the two parts are connected to one another via a pivoting device (27) with a horizontal axis of pivoting (S), so that the lid (13) can be pivoted into an open position.

9. Reusable transport device according to claim 8, **characterised in that** the lid (13) has a groove (33) which extends along the axis of pivoting (S); that the axis of pivoting (S) is arranged in the wall (N) of the groove; that a holding means (23) for textiles is arranged on the wall (N) of the groove; that an engaging means (36) for the holding means (23) is provided; and that the holding means (23), the wall (N) of the groove and the axis of pivoting (S) are associated with one another in such a way that an arrangement of the holding means (23) and engaging means (36) cannot be undone when the lid (13) is closed, but can be undone when said lid (13) is open.

10. Reusable transport device according to claim 9, **characterised in that** the wall (N) of the groove keeps the engaging means (36) on the holding means (23).

11. Reusable transport device according to claims 7 and 8, **characterised in that** the vertical division of the casing (16) lies in the vertical plane of the axis of pivoting (S), so that a part (17, 18) of the casing can be removed when the lid (13) is open, but is secured by said lid (13) when the latter is closed.

12. Reusable transport device according to one of the preceding claims, **characterised in that** the platform (11) and the casing (16) which has been put on, and/or the casing (16) and the lid (13) which has been put on, are connected to one another by a single-use and/or reusable locking means.

13. Reusable transport device according to claim 12, **characterised in that** the single-use locking means is a lead seal, and the reusable locking means is a padlock.

14. Reusable transport device according to one of the preceding claims, **characterised in that** the lid (13) has depressions (19) that correspond with the position of the platform rollers (12), so that a number of transport devices (10) can be stacked - platform (11) on lid (13).

15. Reusable transport device according to claim 1, **characterised in that** the horizontal support is part of the lid (13).

## Revendications

1. Dispositif de transport à plusieurs trajectoires (10) pour des textiles, en particulier pour des pièces de vêtement transportées de manière suspendue, avec une plateforme (11) avec des roulettes (12) disposées en dessous, ainsi que des supports verticaux disposés au niveau des côtés opposés de la plateforme (11) et portant un support horizontal pour suspendre des textiles, **caractérisé en ce que** la plateforme (11) forme un fond, **en ce que** sur la plateforme (11) est posée, de manière amovible, une coque (16), **en ce que** les supports verticaux sont formés des parois de la coque et **en ce qu'**un couvercle est posé de manière amovible sur les parois de la coque.

2. Dispositif de transport à plusieurs trajectoires selon la revendication 1, **caractérisé en ce que** la plateforme (11), le couvercle (13) et la coque (16) sont en matière plastique.

3. Dispositif de transport à plusieurs trajectoires selon la revendication 1 ou 2, **caractérisé en ce que** la coque (16) peut être assemblée et peut être logée entre la plateforme (11) et le couvercle (13).

4. Dispositif de transport à plusieurs trajectoires selon l'une des revendications 1 à 3, **caractérisé en ce que** la plateforme (11) et le couvercle (13) portent des dispositifs de verrouillage qui garantissent un assemblage en toute sécurité entre la plateforme (11) et la coque (16), entre le couvercle (13) et la coque (16), ainsi qu'entre la plateforme (11) et le couvercle (13).

5. Dispositif de transport à plusieurs trajectoires selon l'une des précédentes revendications, **caractérisé en ce que** la plateforme (11) présente une paroi (14) orientée vers le couvercle (13) et munie d'un profil (15) pour supporter la coque (16) pouvant être disposée au niveau de la paroi (14).

6. Dispositif de transport à plusieurs trajectoires selon la revendication 3, **caractérisé en ce que** la coque (16) assemblée et disposée entre la plateforme (11) et le couvercle (13) reçoit essentiellement la surface de base maximale disponible pour l'insertion.

7. Dispositif de transport à plusieurs trajectoires selon l'une des précédentes revendications, **caractérisé en ce que** la coque (16) est conçue, verticalement, en deux parties de telle façon qu'une paroi latérale du contenant est libre d'accès en démontant une partie (17, 18) de la coque.

8. Dispositif de transport à plusieurs trajectoires selon l'une des précédentes revendications, **caractérisé en ce que** le couvercle (13) est divisé verticalement en deux parties, celles-ci étant reliées ensemble par le biais d'un dispositif pivotant (27) avec un axe de pivotement (S) horizontal, de sorte que le couvercle (13) peut être pivoté en position ouverte.

9. Dispositif de transport à plusieurs trajectoires selon la revendication 8, **caractérisé en ce que** le couvercle (13) présente une rainure (33) longeant l'axe de pivotement (S), **en ce que** l'axe de pivotement (S) est disposé dans la paroi de rainure (N), **en ce qu'**un moyen de retenue (23) est disposé pour des textiles au niveau de la paroi de rainure (N), **en ce qu'**il est prévu un moyen d'engagement (36) pour le moyen de retenue (23), **en ce que** le moyen de retenue (23), la paroi de rainure (N) et l'axe de pivotement (S) sont conjugués de telle sorte qu'une disposition du moyen de retenue (23) et du moyen d'engagement (36) ne peut pas être démontée si le couvercle (13) est fermé, mais, peut être démontée si le couvercle (13) est ouvert.

10. Dispositif de transport à plusieurs trajectoires selon la revendication 9, **caractérisé en ce que** la paroi de rainure (N) tient le moyen d'engagement (36) au niveau du moyen de retenue (23).

11. Dispositif de transport à plusieurs trajectoires selon les revendications 7 et 8, **caractérisé en ce que** la division verticale de la coque (16) est dans le plan vertical de l'axe de pivotement (S), de sorte qu'une partie (17, 18) de la coque peut être retirée si le couvercle (13) est ouvert, cependant, sécurisée par celui-ci, si le couvercle (13) est fermé.

12. Dispositif de transport à plusieurs trajectoires selon l'une des précédentes revendications, **caractérisé en ce que** la plateforme (11) et la coque (16) posée et/ou la coque (16) et le couvercle (13) posé sont reliés ensemble avec un moyen de fermeture à usage unique et/ou multiple.

13. Dispositif de transport à plusieurs trajectoires selon la revendication 12, **caractérisé en ce que** le moyen de fermeture à usage unique est un plomb, et le moyen de fermeture à usage multiple est un cadenas.

14. Dispositif de transport à plusieurs trajectoires selon l'une des précédentes revendications, **caractérisé en ce que** le couvercle (13) présente des creux (19) correspondant à l'emplacement des roulettes (12) de la plateforme, de sorte que plusieurs dispositifs de transport (10) - plateforme (11) peuvent être empilés sur le couvercle (13).

15. Dispositif de transport à plusieurs trajectoires selon la revendication 1, **caractérisé en ce que** le support horizontal est partie du couvercle (13).
